(19) Europäisches Patentamt
European Patent Office
Office européen des brevets

(11) **EP 1 787 031 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**04.11.2015   Patentblatt 2015/45**

(45) Hinweis auf die Patenterteilung:
**30.09.2009   Patentblatt 2009/40**

(21) Anmeldenummer: **05782810.5**

(22) Anmeldetag: **25.08.2005**

(51) Int Cl.:
**F16B 5/06** (2006.01)      **B60R 21/20** (2011.01)

(86) Internationale Anmeldenummer:
**PCT/DE2005/001508**

(87) Internationale Veröffentlichungsnummer:
**WO 2006/026956 (16.03.2006 Gazette 2006/11)**

(54) **BEFESTIGUNGSELEMENT**

FIXING ELEMENT

ELEMENT DE FIXATION

(84) Benannte Vertragsstaaten:
**DE FR GB SE**

(30) Priorität: **06.09.2004   DE 202004014219 U**

(43) Veröffentlichungstag der Anmeldung:
**23.05.2007   Patentblatt 2007/21**

(60) Teilanmeldung:
**09168956.2 / 2 123 918**

(73) Patentinhaber: **Takata AG**
**63743 Aschaffenburg (DE)**

(72) Erfinder: **BAUMGARTNER, Peter**
**89312 Günzburg (DE)**

(74) Vertreter: **Maikowski & Ninnemann**
**Postfach 15 09 20**
**10671 Berlin (DE)**

(56) Entgegenhaltungen:
| | |
|---|---|
| EP-A- 0 889 247 | EP-A- 1 584 521 |
| EP-A1- 0 908 633 | EP-A1- 1 186 787 |
| DE-A1- 4 026 922 | DE-A1- 19 607 786 |
| US-A- 3 864 789 | US-A- 4 728 068 |
| US-A- 5 539 962 | |

**Beschreibung**

Die Erfindung bezieht sich auf eine Anordnung mit den Merkmalen gemäß dem Oberbegriff des Anspruchs 1. Ein Befestigungselement ist aus der US-Patentschrift US 3,864,789 bekannt.

Ein anderes Befestigungselement ist aus der Veröffentlichungsschrift zur internationalen Patentanmeldung WO 02/28690 A1 bekannt. Dieses Befestigungselement wird durch ein Befestigungsclip gebildet, mit dem ein Airbag als zu befestigendes Teil außen an einer Trägerwand, beispielsweise einem Karosserieteil eines Fahrzeugs, befestigt werden kann. Konkret wird der Befestigungsclip zur Befestigung in einer Öffnung der Trägerwand verrastet. Der Befestigungsclip ist hierzu derart ausgestaltet, dass er in die Öffnung der Trägerwand einsetzbar ist und diese durchgreift, wobei bei Erreichen einer vorgegebenen Endlage beim Einsetzen des Befestigungsclips in der Trägerwand eine Verriegelung auftritt, so dass ein Herausziehen des Befestigungsclips aus der Öffnung der Trägerwand unterbunden wird. Zur Verriegelung weist der Befestigungsclip ein Schnappelement und ein Anschlagselement auf. Das Anschlagselement liegt im verriegelten Zustand des Befestigungselements außen an der Trägerwand an. Unter der "Außenseite" der Trägerwand wird dabei diejenige Seite verstanden, an der sich das zu befestigende Teil, also der Airbag, befindet. Auf der anderen Wandseite der Trägerwand, also an der dem Airbag abgewandten Rückseite der Trägerwand, befindet sich das Schnappelement, das zur Verriegelung des Befestigungselements an der Rückseite der Trägerwand anliegt.

Der Erfindung liegt die Aufgabe zugrunde, eine Anordnung anzugeben, die sich besonders einfach handhaben lässt.

Diese Aufgabe wird erfindungsgemäß durch das kennzeichnende Merkmal des Anspruchs 1 gelöst. Vorteilhafte Ausgestaltungen sind in Unteransprüchen angegeben.

Ein wesentlicher Vorteil des Befestigungselements ist darin zu sehen, dass sich dieses aus der Öffnung der Trägerwand ohne weiteres wieder lösen lässt, indem das Entriegelungselement entsprechend betätigt wird. Das Befestigungselement ermöglicht somit eine sehr einfache Handhabung, da sich mit diesem Teile an einer Trägerwand sowohl einfach befestigen als auch einfach wieder lösen lassen.

Ein weiterer wesentlicher Vorteil des Befestigungselements besteht darin, dass sich das Befestigungselement aufgrund des Entriegelungselements von dem Träger lösen lässt, ohne dass es hierbei beschädigt wird. Das Befestigungselement lässt sich somit mehrfach verwenden.

Ein dritter wesentlicher Vorteil des Befestigungselements ist darin zu sehen, dass dieses durch einen reinen "Clipsvorgang" installiert werden kann. Schrauben oder dergleichen sind zur Installation des Befestigungselements nicht erforderlich; auch müssen keine Gewinde oder sonstigen Vorkehrungen in der Öffnung der Trägerwand vorgesehen werden.

Dadurch, dass das Entriegelungselement die Öffnung der Trägerwand erfindungsgemäß durchgreift, kann es besonders einfach unmittelbar von außen betätigt werden.

Das Schnappelement weist eine Grundplatte mit zwei parallelen oder zumindest annähernd parallelen Seitenkanten auf, wobei an jeder dieser beiden Seitenkanten jeweils eine Arretierplatte angebracht ist, mit der das Befestigungselement an der Trägerwand arretiert wird. Bevorzugt steigt der Abstand der Arretierplatten zueinander mit wachsendem Abstand von der Grundplatte an, wobei der Abstand der Seitenwände an ihrem der Grundplatte abgewandten Ende größer als der Abstand der zugeordneten Öffnungsränder der Öffnung der Trägerwand ist. Im Querschnitt ist das Schnappelement somit annähernd U- bzw. V-förmig, wobei die beiden Arretierplatten die Seitenteile des U bzw. des V bilden.

Vorzugsweise sind die Arretierplatten federnd ausgestaltet und derart zusammendrückbar, dass beim Einführen des Befestigungselements in die Öffnung der Trägerwand der Abstand der Arretierplatten durch Einwirkung der Öffnungsränder der Öffnung derart reduziert wird, dass der Abstand der Arretierplatten dem Abstand der Öffnungslöcher entspricht; damit können dann die beiden Arretierplatten durch die Öffnung der Trägerwand hindurch geschoben werden.

Im Falle eines Schnappelements mit zwei Arretierplatten sind vorzugsweise zwei Entriegelungselemente vorhanden, von denen eines mit der einen Arretierplatte und das andere mit der anderen Arretierplatte zusammenwirkt. Durch die beiden Entriegelungselemente lassen sich somit beide Arretierplatten betätigen, wodurch ein Entriegeln des Befestigungselements erleichtert wird.

Die Entriegelungselemente können beispielsweise durch Laschen oder Winkelteile gebildet sein, die an dem der Grundplatte abgewandten Ende der jeweiligen Arretierplatte angebracht sind. Vorzugsweise sind die Entriegelungselemente mit ihrer jeweils zugeordneten Arretierplatte einstückig verbunden.

Die Anordnung der Entriegelungselemente an den Arretierplatten ist vorzugsweise dergestalt, dass eine Betätigung der Entriegelungselemente durch ein Zueinander-Zusammendrücken der Entriegelungselemente erfolgen kann.

Die Grundplatte des Schnappelements ist quadratisch oder rechteckförmig, zumindest im Wesentlichen quadratisch oder im Wesentlichen rechteckförmig, ausgestaltet. Dabei weist die Grundplatte ein weiteres Paar Seitenkanten auf, die zu den Seitenkanten mit den davon abgehenden Arretierplatten jeweils senkrecht stehen und die zueinander parallel verlaufen. An jeder der zwei Seitenkanten dieses weiteren Seitenkantenpaares ist jeweils eine Verbindungsplatte angeordnet. Diese Verbindungsplatten dienen, dazu Anschlagsplatten des oben bereits erwähnten Anschlagselementes zu halten.

Das Anschlagelement weist zwei Anschlagsplatten auf, von denen eine mit der einen Verbindungsplatte und die andere mit der anderen Verbindungsplatte in Verbindung steht. Die Verbindungsplatten und ihre zugehörigen Anschlagsplatten können jeweils einstückig miteinander verbunden sein.

Besonders bevorzugt sind die Anschlagsplatten abgewinkelt ausgeführt, so dass bei arretiertem Befestigungselement diese federnd an der Außenseite der Trägerwand - also außen an der Trägerwand - anliegen.

Die abgewinkelten Anschlagsplatten können beispielsweise jeweils eine Teilplatte, die parallel zur Trägerwand und zur Grundplatte des Befestigungselements verläuft, sowie eine weitere Teilplatte aufweisen, die gegenüber der parallelen Teilplatte abgewinkelt ist. Vorzugsweise dient die zur Grundplatte parallele Teilplatte jeweils dazu, die abgewinkelte Teilplatte mit der zugeordneten Verbindungsplatte zu verbinden.

Bei dem Befestigungselement handelt es sich vorzugsweise um einen einstückigen Clip, vorzugsweise aus Metall oder Kunststoff. Das Befestigungselement kann beispielsweise durch ein einstückiges Stanzbiegeteil aus Metall gebildet sein.

Vorzugsweise sind die Entriegelungselemente derart ausgestaltet, dass sie ohne Spezialwerkzeug gelöst werden können. Im Übrigen ist das Befestigungselement vorzugsweise verdrehsicher ausgeführt; dies bedeutet, dass er in der Öffnung der Trägerwand nicht verdreht werden kann.

Bei dem Airbagmodul kann es sich beispielsweise um ein Seitenairbagmodul handeln.

Die Erfindung wird nachfolgend anhand eines Ausführungsbeispiels erläutert, das in Figuren näher dargestellt ist. Hierbei zeigen:

Figuren 1 und 2    verschiedene Ansichten allein des Befestigungselements,

Figur 3    das Befestigungselement gemäß den Figuren 1 und 2 nach einer Befestigung an einer Trägerwand,

Figuren 4 bis 8    das Befestigungselement gemäß den Figuren 1 bis 3 beim Einsatz zur Befestigung eines Teiles an einer Trägerwand und

Figuren 9 bis 13    ein Ausführungsbeispiel eines Airbagmoduls, das mit dem Befestigungselement gemäß den Figuren 1 bis 7 an einer Fahrzeugkarosserie befestigt wird.

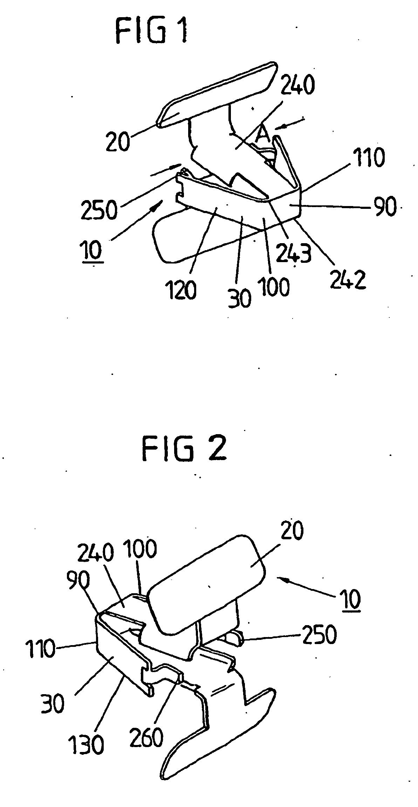

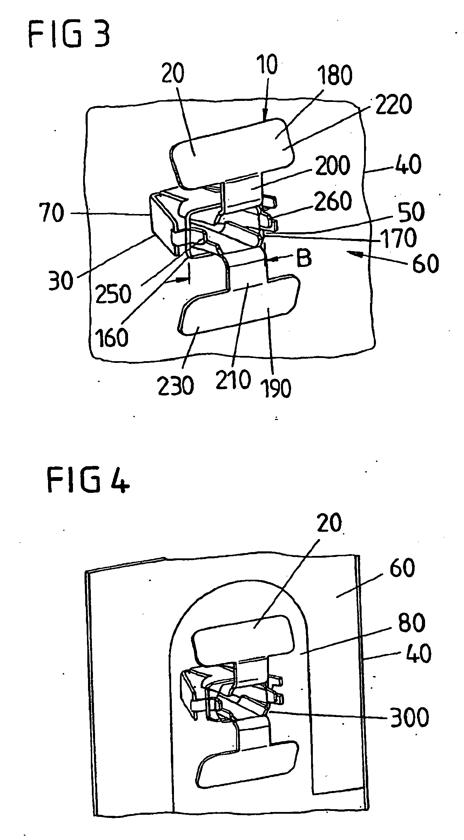

In den Figuren 1 und 2 ist ein Befestigungselement in Form eines Befestigungsclips 10 dargestellt. Das Befestigungselement 10 weist ein Anschlagelement 20 sowie ein Schnappelement 30 auf. Das Anschlagelement 20 und das Schnappelement 30 dienen zur Befestigung des Befestigungselementes 10 an einer Trägerwand 40, die in der Figur 3 schematisch dargestellt ist.

In der Figur 3 lässt sich erkennen, dass das Befestigungselement 10 zwecks Befestigung an der Trägerwand 40 durch eine Öffnung 50 der Trägerwand 40 hindurch gesteckt wird. Dabei greift das Schnappelement 30 durch die Öffnung 50 der Trägerwand hindurch und verriegelt das Befestigungselement 10 an der Trägerwand 40, sobald es tief genug eingeführt worden ist.

Im verriegelten Zustand liegt das Anschlagselement 20 an der "Außenseite" 60 der Trägerwand 40 an; unter der "Außenseite" wird nachfolgend diejenige Seite der Trägerwand 40 verstanden, an der ein zu befestigendes Teil, beispielsweise ein Airbag oder ein Airbagmodul, mit dem Befestigungselement 10 angebracht wird. Auf der anderen Seite 70 der Trägerwand 40 - nachfolgend kurz Rückseite 70 genannt - liegt das Schnappelement 30 an der Trägerwand 40 derart an, dass ein Herausziehen des Befestigungselements 10 aus der Öffnung 50 bzw. von der Trägerwand 40 nicht möglich ist.

Das Befestigen eines zu befestigenden Teiles an der Trägerwand 40 mit dem beschriebenen Befestigungselement ist schematisch in der Figur 4 dargestellt. Das zu befestigende Teil ist mit dem Bezugszeichen 80 gekennzeichnet und liegt an der Vorderseite 60 der Trägerwand 40 auf und wird mit dem Anschlagelement 20 an der Trägerwand 40 festgeklemmt.

Wie sich in den Figuren 1 bis 4 erkennen lässt, weist das Schnappelement 30 eine Grundplatte 90 auf, die im Wesentlichen rechteckförmig ausgestaltet ist. An zwei parallelen Seitenkanten 100 und 110 der Grundplatte 90 sind zwei Arretierplatten 120 und 130 einstückig angeformt. Die beiden Arretierplatten 120 und 130 weisen einen Abstand zueinander auf, der mit wachsendem Abstand der Arretierplatten 120 und 130 von der Grundplatte 90 ansteigt. Im Querschnitt betrachtet, sind die Grundplatte 90 und die beiden Arretierplatten 120 und 130 somit annähernd V-förmig. Der obere Abstand A zwischen den beiden Arretierplatten 120 und 130 ist derart bemessen, dass er größer als die Breite B der Öffnung 50 in der Trägerwand 40 ist. Es gilt also

$$A > B.$$

Die Querschnittsfläche der Grundplatte 90 ist derart gewählt, dass diese kleiner bzw. maximal so groß wie die Öffnung 50 der Trägerwand 40 ist. Somit ist es möglich, das Befestigungselement 10 ohne weiteres mit der Grundplatte 90 zuerst in die Öffnung 50 einzuführen. Bei einem solchen Einführen des Befestigungselements 10 in die Öffnung 50 werden die beiden Arretierplatten 120 und 130 gegen die beiden Öffnungsränder 160 und 170 anstoßen, so dass die beiden federnd bzw. elastisch von der Grundplatte 90 gehaltenen Arretierplatten 120 und 130 zusammengebogen werden, während das Befestigungselement 10 in die Öffnung 50 eingeführt wird.

Sobald eine vorgegebene Endlage erreicht ist, bei der die beiden Arretierplatten 120 und 130 die Öffnung 50 der Trägerwand 40 vollständig passiert haben, werden die beiden Arretierplatten 120 und 130 auseinander schnappen und somit eine Verriegelung des Befestigungselements 10 in der Öffnung 50 bewirken. Die beiden Arretierplatten 120 und 130 bilden also ein Schnappelement und verhindern aufgrund ihres Abstandes A zueinander ein Herausziehen des Befestigungselements 10 aus der Öffnung 50.

Während die Befestigung des Befestigungselements 10 auf der Rückseite 70 der Trägerwand 40 durch das Schnappelement 30 bewirkt wird, wird das Verriegeln des Befestigungselements 10 auf der Vorderseite 60 der Trägerwand 40 durch das Anschlagselement 20 bewirkt. Das Anschlagselement 20 weist hierzu zwei Anschlagsplatten 180 und 190 auf, die zur Verriegelung des Befestigungselements 10 federnd auf der Trägerwand 40 aufliegen.

Um dieses federnde Aufliegen auf der Trägerwand 40 zu bewirken, sind die beiden Anschlagsplatten 180 und 190 jeweils abgewinkelt aufgeführt. Beide Anschlagsplatten weisen jeweils eine parallele Teilplatte 200 bzw. 210 auf, die im Wesentlichen parallel zur Grundplatte 90 des Befestigungselements 10 und parallel zur Trägerwand 40 verläuft. An die beiden parallelen Teilplatten 200 und 210 ist jeweils eine abgewinkelte Teilplatte 220 und 230 angeformt und zwar in einem vorgegebenen Winkel. Dieser Winkel ist derart gewählt, dass die beiden abgewinkelten Teilplatten 220 und 230 in Richtung zur Trägerwand 40 bzw. zur Grundplatte 90 orientiert sind. Wird nun das Befestigungselement 10 in die Öffnung 50 eingeführt, so werden die beiden abgewinkelten Teilplatten 220 und 230 gegen die Vorderseite 60 der Trägerwand 40 gestoßen und federnd ausgelenkt, bis die beiden Arretierplatten 120 und 130 vollständig durch die Öffnung 50 hindurch geführt werden, auseinander schnappen und damit das Befestigungselement 10 verriegeln. Die beiden abgewinkelten Teilplatten 220 und 230 bewirken somit ein festes Anliegen des Befestigungselements 10 an der Trägewand 40, so dass ein Klappern des Befestigungselements 10 an der Trägerwand 40 unterbunden wird.

Insbesondere in den Figuren 1 und 2 ist gut erkennbar, dass die beiden abgewinkelten Teilplatten 220 und 230 mittels der beiden parallelen Teilplatten 200 und 210 jeweils mit einer Verbindungsplatte 240 und 241 verbunden sind. Die beiden Verbindungsplatten 240 und 241 sind außerdem jeweils mit der Grundplatte 90 verbunden, und zwar an parallelen Seitenkanten 242 und 243 der Grundplatte 90.

Wie sich in den Figuren 1 bis 3 außerdem erkennen lässt, ist an die beiden Arretierplatten 120 und 130 jeweils ein Entriegelungselement in Form einer Lasche oder eines Entriegelungsbügels 250 bzw. 260 angeformt. Die beiden Entriegelungsbügel erstrecken sich jeweils von dem der Grundplatte 90 abgewandten Ende der beiden Arretierplatten 120 bzw. 130 durch die Öffnung 50 an der Trägerwand 40 hindurch zur Vorderseite 60 der Trägerwand und sind von außen somit unmittelbar zugänglich. Durch ein Zusammendrücken der beiden Entriegelungselemente 250 und 260 - beispielsweise per Hand oder mit einer Standard-Zange - lassen sich die beiden Arretierplatten 120 und 130 zusammendrücken, so dass diese nur noch einen Abstand aufweisen, der dem Abstand B zwischen den beiden Öffnungsrändern 160 und 170 der Öffnung 50 entspricht. Somit ist es möglich, das Befestigungselement 10 aus der Öffnung 50 herauszuziehen und das Befestigungselement von der Trägerwand zu entfernen.

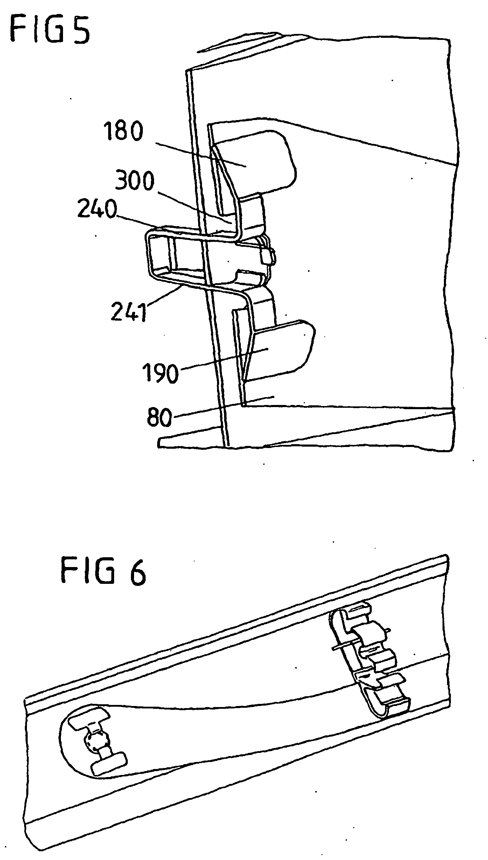

Im Zusammenhang mit der Figur 4 ist erkennbar, dass zur Befestigung des Teiles 80 dieses ein Loch 300 aufweist, durch das das Befestigungselement 10 mit seinem Schnappelement 30 vollständig hindurchgeführt ist. Das Teil 80 wird somit mit den beiden Anschlagsplatten 180 und 190 gehalten. Die Befestigung des Teiles 80 mittels des Befestigungselements 10 an der Trägerwand 40 ist in einem Schnitt nochmals im Detail in der Figur 5 und in einer Draufsicht in der Figur 6 gezeigt.

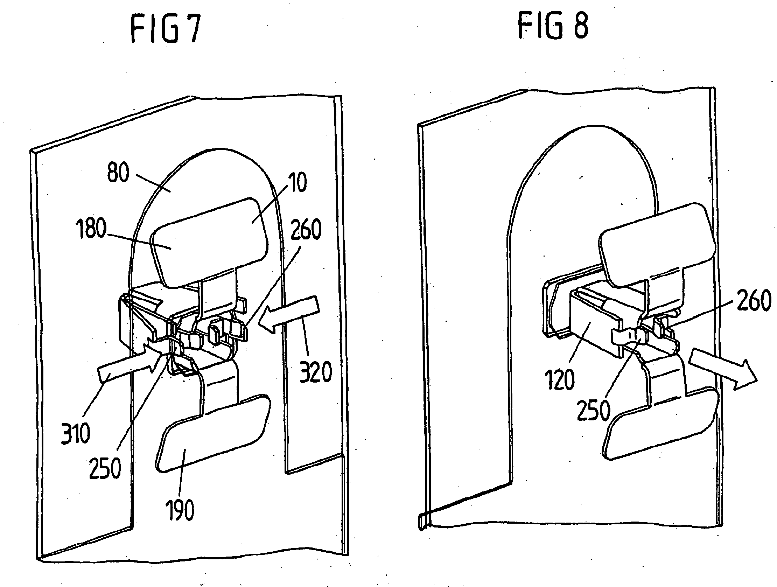

Die Figuren 7 und 8 zeigen das Entriegeln des Befestigungselementes 10 durch Zusammendrücken der beiden Entriegelungselemente 250 und 260. Die beiden Pfeile 310 und 320 deuten dabei an, wie auf die beiden Entriegelungselemente 250 und 260 Kraft ausgeübt werden muss, um zu einem Entriegeln zu gelangen. Das Befestigungselement 10 in seiner entriegelten Position ist in der Figur 8 gezeigt.

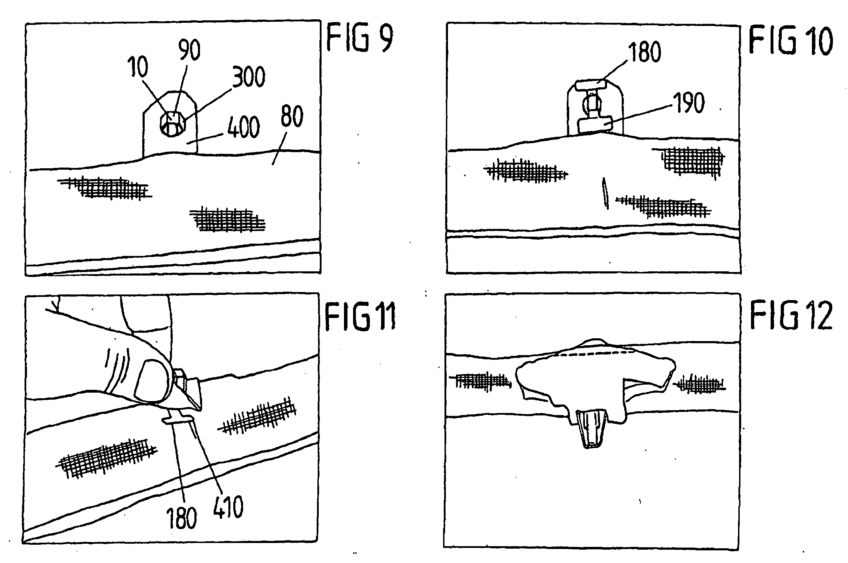

Im Zusammenhang mit den Figuren 9 bis 13 soll nun erläutert werden, wie mit dem Befestigungselement 10 ein Gassack eines Airbagmoduls oder das gesamte Airbagmodul an einem Träger, beispielsweise an einer Fahrzeugkarosserie, befestigt werden kann. Der Gassack ist also das "zu befestigende Teil", das gemäß Figur 4 mit dem Bezugzeichen 80 gekennzeichnet wird.

Der Gassack 80 weist zur Befestigung eine Lasche 400 mit einem Befestigungsloch 300 auf, durch das das Befestigungselement 10 teilweise hindurchgeschoben ist. Die Größe des Befestigungsloches 300 ist dabei derart gewählt, dass lediglich das Schnappelement 30 des Befestigungselements 10 hindurchgeführt werden kann, wohingegen das Anschlagselement 20 zu groß ist und somit nicht durch das Öffnungsloch 400 gelangen kann. Dies zeigen insbesondere die Figuren 10 und 11 im Detail.

In den Figuren 11 und 12 ist darüber hinaus erkennbar, dass die beiden Anschlagsplatten 180 und 190 zur weiteren Fixierung des Airbags 80 verwendet werden können, indem die beiden Anschlagsplatten 180 und 190 in eine Hülle des Gassacks durch einen Schlitz 410 eingeführt werden.

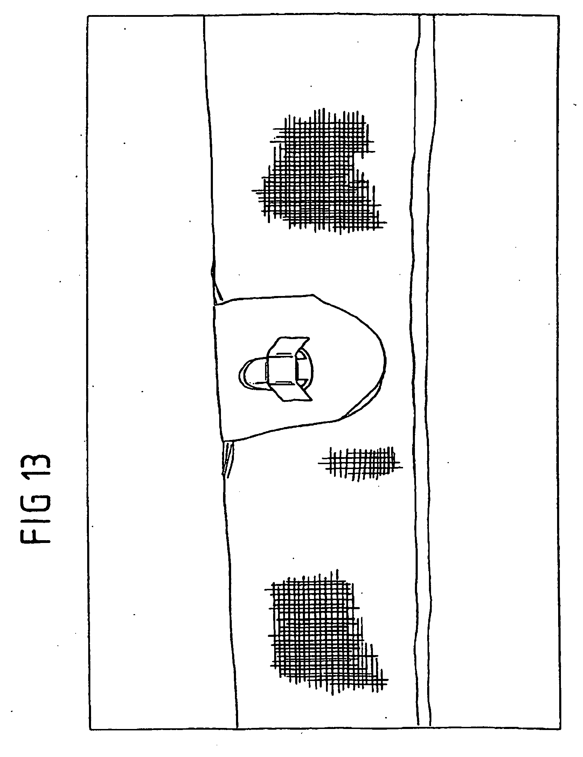

In der Figur 12 ist der Airbag 80 erkennbar, nachdem das Befestigungselement 10 durch die Öffnung 300 hindurchgeführt und mit den Anschlagsplatten 180 und 190 in der Hülle des Airbagmoduls "eingehängt" wurde. Die Figur 13 zeigt eine andere Sicht auf die resultierende Anordnung bestehend aus dem Befestigungselement 10 und dem Airbag 80.

Die in den Figuren 12 und 13 gezeigte resultierende Anordnung kann nun an der Trägerwand 40 mit der Öffnung 50 (vgl. Figuren 3 bis 8) festgerastet werden; bei der Trägerwand 40 kann es sich beispielsweise um eine Karosserie eines Kraftfahrzeuges handeln.

**Bezugszeichenliste**

| | |
|---|---|
| 10 | Befestigungselement bzw. Befestigungsclip |
| 20 | Anschlagselement |
| 30 | Schnappelement |
| 40 | Trägerwand |
| 50 | Öffnung in der Trägerwand |
| 60 | Vorderseite der Trägerwand |
| 70 | Rückseite der Trägerwand |
| 80 | zu befestigendes Teil |
| 90 | Grundplatte |
| 100, 110 | Seitenkanten |
| 120, 130 | Arretierplatten |
| 160, 170 | Öffnungsränder der Öffnung 50 |
| 180, 190 | Anschlagsplatten |
| 200,210 | parallele Teilplatten |
| 220, 230 | abgewinkelte Teilplatten |
| 250, 260 | Entriegelungselemente |
| 240, 241 | Verbindungsplatten |
| 242, 243 | Seitenkanten |
| 300 | Öffnungsloch des Teils 80 |
| 310,320 | Pfeile |
| 400 | Airbag-Befestigungslasche |
| 410 | Schlitz |

**Patentansprüche**

1. Anordnung aufweisend eine Trägerwand eines Fahrzeugs, ein Befestigungselement sowie ein Teil in Form eines Airbags oder Airbagmoduls, der bzw. das mittels des Befestigungselements an oder in dem Fahrzeug befestigt ist, wobei das Befestigungselement (10), zum Befestigen des Airbags (80) bzw. Airbagmoduls außen an der Trägerwand (40) hierzu in eine Öffnung (50) der Trägerwand eingesetzt ist,

   - wobei das Befestigungselement (10) derart ausgestattet ist, dass es die Öffnung (50) durchgreift und bei Erreichen einer vorgegebenen Endlage an der Trägerwand (40) verriegelt und ein Herausziehen des Befestigungselements (10) aus der Öffnung (50) unterbindet und
   - wobei das Befestigungselement (10) im verriegelten Zustand an beiden Seiten (60) und (70) der Trägerwand anliegt und zwar mit einem Anschlagselement (20) außen an der Trägerwand (40) - und damit an der dem Teil (80) zugewandten Seite der Trägerwand (40) - und mit einem Schnappelement (30) an der anderen, dem Teil (80) abgewandten Seite (70) der Trägerwand (40), wobei
   - mit dem Schnappelement (30) ein die Öffnung (50) durchgreifendes Entriegelungselement (250, 260) in Verbindung steht, das von außen zugänglich ist und ein Entriegeln des Schnappelements (30) und ein Herausziehen des Befestigungselements (10) aus der Öffnung (50) ermöglicht,

   **dadurch gekennzeichnet, dass**
   das Schnappelement (30) eine Grundplatte (90) mit zwei parallelen oder zumindest annähernd parallelen Seitenkanten (100, 110) aufweist und dass an jeder dieser beiden Seitenkanten (11, 110) jeweils eine Arretierplatte (120, 130) angebracht ist, mit der das Befestigungselement (10) an der Trägerwand (40) arretiert wird, wobei die Grundplatte (90) quadratisch oder rechteckförmig, zumindest im Wesentlichen quadratisch oder im Wesentlichen rechteckförmig, ausgestaltet ist, und ein weiteres Paar Seitenkanten (242, 243) aufweist, die zu den Seitenkanten (100, 110) mit den davon abgehenden Arretierplatten (120, 130) jeweils senkrecht stehen und die zueinander parallel verlaufen, und
   an jeder der zwei Seitenkanten (242, 243) des weiteren Seitenkantenpaares jeweils eine Verbindungsplatte (240, 241) angeordnet ist und das Anschlagselement (20) zwei Anschlagsplatten (180, 190) aufweist, von denen eine mit der einen Verbindungsplatte (240) und die andere mit der anderen Verbindungsplatte (241) in Verbindung steht.

2. Anordnung nach Anspruch 1, **dadurch gekennzeichnet, dass** der Abstand der zwei Arretierplatten (120, 130) zueinander mit wachsendem Abstand von der Grundplatte (90) ansteigt, wobei der Abstand (A) der Arretierplatten (120, 130) an ihrem der Grundplatte (90) abgewandten Ende größer als der Abstand (B) der zugeordneten Öffnungsränder (160, 170) der Öffnung (50) der Trägerwand (40) ist.

3. Anordnung nach einem der Ansprüche 1 oder 2, **dadurch gekennzeichnet, dass** die Arretierplatten (120, 130) federnd ausgestaltet sind und derart zusammendrückbar sind, dass bei einem Einführen des Befestigungselements (10) in die Öffnung (50) der Abstand (A) der Arretierplatten (120, 130) durch Einwirkung der Öffnungsränder (160, 170) der Öffnung (50) derart reduziert werden kann, dass dieser dem Abstand (B) der Öffnungsränder (160, 170) entspricht.

4. Anordnung nach einem der vorangehenden Ansprüche 1 bis 3, **dadurch gekennzeichnet, dass** zwei Entriegelungselemente (250, 260) vorhanden sind, von denen eines (250) mit der einen Arretierplatte (180) und das andere (260) mit der anderen Arretierplatte (190) zusammenwirkt.

5. Anordnung nach Anspruch 4, **dadurch gekennzeichnet, dass** die Entriegelungselemente (250, 260) jeweils an dem der Grundplatte (90) abgewandten Ende der jeweiligen Arretierplatte (120, 130) angebracht ist.

6. Anordnung nach einem der vorangehenden Ansprüche 4 oder 5, **dadurch gekennzeichnet, dass** die Entriegelungselemente (250, 260) mit ihrer jeweils zugeordneten Arretierplatte (120, 130) einstückig verbunden sind.

7. Anordnung nach einem der voranstehenden Ansprüche, **dadurch gekennzeichnet, dass** die Entriegelungselemente (250; 260) betätigt werden, indem sie zueinander zusammengedrückt werden.

8. Anordnung nach einem der vorangehenden Ansprüche, **dadurch gekennzeichnet, dass** die Verbindungsplatten (240, 241) mit der zugeordneten Anschlagsplatte (180, 190) jeweils einstückig verbunden sind.

9. Anordnung nach einem der vorangehenden Ansprüche 7 oder 8, **dadurch gekennzeichnet, dass** die Anschlagsplatten (180, 190) derart abgewinkelt sind, dass diese bei arretiertem Befestigungselement (10) federnd an der Außenseite (60) der Trägerwand (40) anliegen.

10. Anordnung nach Anspruch 9, **dadurch gekennzeichnet, dass** die Anschlagsplatten (180, 190) jeweils eine Teilplatte (200, 210) aufweisen, die parallel zur Trägerwand (40) verläuft, sowie eine weitere Teilplatte (220, 230) aufweisen, die gegenüber der parallelen Teilplatte (200, 210) abgewinkelt ist.

11. Anordnung nach Anspruch 10, **dadurch gekennzeichnet, dass** die parallele Teilplatte (220, 210) jeweils die abgewinkelte Teilplatte (220, 230) mit der zugeordneten Verbindungsplatte (240, 241) verbindet.

12. Anordnung nach einem der vorangehenden Ansprüche, **dadurch gekennzeichnet, dass** das Befestigungselement (10) einstückig, vorzugsweise aus Metall oder Kunststoff ausgebildet ist.

13. Anordnung nach Anspruch 12, **dadurch, gekennzeichnet, dass** das Befestigungselement ein einstückiges Stanzbiegeteil ist.

**Claims**

1. An arrangement comprising a support wall of a vehicle, a fixing element, and a part in form of an airbag or airbag module, the airbag or airbag module being fastened to or in the vehicle by means of the fixing element, wherein the fixing element (10), in order to fix the airbag (80) or airbag module to the outside of the support wall (40), is inserted for this purpose into an opening (50) in the support wall,

   - the fixing element (10) being configured in such a manner that it reaches through the opening (50) and, upon reaching a predetermined end position, locks to the support wall (40) and prevents the fixing element (10) from being pulled out of the opening (50), and
   - in the locked state, the fixing element (10) bearing against both sides (60) and (70) of the support wall, to be precise with a stop element (20) on the outside of the support wall (40) - and therefore on that side of the support wall (40) which faces the part (80) - and with a snap-on element (30) on the other side (70) of the support wall (40), which side faces away from the part (80), wherein
   - an unlocking element (250, 260), which reaches through the opening (50) and which is accessible from the outside, is connected to the snap-on element (30) and permits the snap-on element (30) to be unlocked and the fixing element (10) to be pulled out of the opening (50),

   **characterized in that**
   the snap-on element (30) has a baseplate (90) with two parallel or at least approximately parallel side edges (100, 110), and **in that** a retaining plate (120, 130) is attached in each case to each of these two side edges (11, 110) and is used to retain the fixing element (10) on the support wall (40), wherein the baseplate (90) is of square or rectangular, at least of substantially square or substantially rectangular, design, and has a further pair of side edges (242, 243) which are in each case perpendicular to the side edges (100, 110) with the retaining plates (120, 130) originating therefrom, and which run parallel to each other, and a connecting plate (240, 241) is arranged in each case on each of the two side edges (242, 243) of the further pair of side edges, and the stop element (20) has two stop plates (180, 190) of which one is connected to the one connecting plate (240) and the other is connected to the other connecting plate (241).

2. The arrangement as claimed in claim 1, **characterized in that** the distance of the two retaining plates (120, 130) from each other increases with increasing distance from the baseplate (90), the distance (A) between the retaining plates (120, 130) at their end facing away from the baseplate (90) being greater than the distance (B) between the associated opening edges (160, 170) of the opening (50) in the support wall (40).

3. The arrangement as claimed in either of claims 1 and 2, **characterized in that** the retaining plates (120, 130) are of resilient design and can be pressed together in such a manner that, when the fixing element (10) is introduced into the opening (50), the distance (A) between the retaining plates (120, 130) can be reduced by the effect of the opening edges (160, 170) of the opening (50) in such a manner that said distance corresponds to the distance (B) between the opening edges (160, 170).

4. The arrangement as claimed in one of the preceding claims 1 to 3, **characterized in that** there are two unlocking elements (250, 260) of which one (250) interacts with the one retaining plate (120) and the other (260) interacts with the other retaining plate (130).

5. The arrangement as claimed in claim 4, **characterized in that** the unlocking elements (250, 260) are in each case attached to that end of the respective retaining plate (120, 130) which faces away from the baseplate (90).

6. The arrangement as claimed in either of the preceding claims 4 and 5, **characterized in that** the unlocking elements (250, 260) are connected integrally to their respectively assigned retaining plate (120, 130).

7. The arrangement as claimed in one of the preceding claims, **characterized in that** the unlocking elements (250; 260) are actuated by being pressed together in relation to each other.

8. The arrangement as claimed in in one of the preceding claims, **characterized in that** the connecting plates (240, 241) are in each case connected integrally to the associated stop plate (180, 190).

9. The arrangement as claimed in either of the preceding claims 7 and 8, **characterized in that** the stop plates (180, 190) are angled in such a manner that they bear resiliently against the outside (60) of the support wall (40) when the fixing element (10) is retained in place.

10. The arrangement as claimed in claim 9, **characterized in that** the stop plates (180, 190) each have a partial plate (200, 210) which runs parallel to the support wall (40), and have a further partial plate (220, 230) which is angled in relation to the parallel partial plate (200, 210).

11. The arrangement as claimed in claim 10, **characterized in that** the parallel partial plate (200, 210) in each case connects the angled partial plate (220, 230) to the associated connecting plate (240, 241).

12. The arrangement as claimed in one of the preceding claims, **characterized in that** the fixing element (10) is formed as a single piece, preferably from metal or plastic.

13. The arrangement as claimed in claim 12, **characterized in that** the fixing element is a single-piece punched and bent part.

**Revendications**

1. Dispositif présentant une paroi support d'un véhicule, un élément de fixation et une pièce sous forme d'un airbag ou d'un module airbag, l'airbag ou le module d'airbag étant fixé au niveau ou dans le véhicule à l'aide de l'élément de fixation, dans lequel pour fixer l'airbag (80) ou le module d'airbag à l'extérieur sur la paroi support (40), l'élément de fixation (10) est à cet effet inséré dans une ouverture (50) de la paroi support,

- l'élément de fixation (10) étant configuré de telle sorte qu'il traverse l'ouverture (50) et est verrouillé au niveau de la paroi support (40) lorsqu'une position finale prédéfinie est atteinte et empêche une extraction de l'élément de fixation (10) de l'ouverture (50),
- l'élément de fixation (10) s'appuyant à l'état verrouillé sur les deux côtés (60) et (70) de la paroi support et ce avec un élément de butée (20) à l'extérieur sur la paroi support (40) - et ainsi sur le côté de la paroi support (40) tourné vers la pièce (80)-et avec un élément à encliquetage (30) sur l'autre côté (70) de la paroi support (40) opposé à la pièce (80),
- un élément de déverrouillage (250, 260) traversant l'ouverture (50) étant en relation avec l'élément à encliquetage (30), lequel élément de déverrouillage étant accessible de l'extérieur et permettant un déverrouillage de l'élément à encliquetage (30) et une extraction de l'élément de fixation (10) de l'ouverture (50),

**caractérisé en ce que**
l'élément à encliquetage (30) présente une plaque de base (90) avec deux arêtes latérales (100, 110) parallèles ou au moins approximativement parallèles et **en ce que** respectivement une plaque d'arrêt (120, 130), avec laquelle l'élément de fixation (10) est arrêté au niveau de la paroi support (40), est montée au niveau de chacune de ces deux arêtes latérales (11, 110), la plaque de base (90) étant de configuration carrée ou rectangulaire, au moins essentiellement carrée ou essentiellement rectangulaire et comprenant une autre paire des arêtes latérales (242, 243), qui sont respectivement perpendiculaires aux arêtes latérales (100, 110) avec les plaques d'arrêt (120, 130) qui s'en éloignent, et s'étendent parallèlement l'une à l'autre, une plaque de liaison (240, 241) étant agencée au niveau de chacune des deux arêtes latérales (242, 243) de l'autre paire d'arêtes latérales, l'élément de butée (20) comprenant deux plaques de butée (180, 190), dont l'une est en relation avec l'une des plaques de liaison (240) et l'autre avec l'autre plaque de liaison (241).

2. Dispositif selon la revendication 1, **caractérisé en ce que** la distance entre les deux plaques d'arrêt (120, 130) augmente lorsque la distance de la plaque de base (90) augmente, la distance (A) des plaques d'arrêt (120, 130) au niveau de leur extrémité opposée à la plaque de base (90) étant supérieure à la distance (B) des bords d'ouverture (160, 170) associés de l'ouverture (50) de la paroi support (40).

3. Dispositif selon l'une quelconque des revendications 1 ou 2, **caractérisé en ce que** les plaques d'arrêt (120, 130) sont configurées de manière élastique et peuvent être comprimées de telle sorte que lorsque l'élément de fixation (10) est introduit dans l'ouverture (50), la distance (A) des plaques d'arrêt (120, 130) peut être réduite sous l'effet des bords d'ouverture (160, 170) de l'ouverture (50) de telle sorte que celle-ci correspond à la distance (B) des bords d'ouvertures (160, 170).

4. Dispositif selon l'une quelconque des revendications précédentes 1 à 3, **caractérisé en ce qu'**il y a deux éléments de déverrouillage (250, 260), dont l'un (250) coopère avec l'une des plaques d'arrêt (180) et l'autre (260) avec l'autre plaque d'arrêt (190).

5. Dispositif selon la revendication 4, **caractérisé en ce que** les éléments de déverrouillage (250, 260) sont montés respectivement au niveau de l'extrémité, opposée à la plaque de base (90), de la plaque d'arrêt (120, 130) respective.

6. Dispositif selon l'une quelconque des revendications 4 ou 5, **caractérisé en ce que** les éléments de déverrouillage (250, 260) sont reliés d'un seul tenant à leur plaque d'arrêt (120, 130) respectivement associée.

7. Dispositif selon l'une quelconque des revendications précédentes, **caractérisé en ce que** les éléments de déverrouillage (250 ; 260) sont actionnés en les comprimant les uns contre les autres.

8. Dispositif selon l'une quelconque des revendications précédentes, **caractérisé en ce que** les plaques de liaison (240, 241) sont reliées respectivement d'un seul tenant à la plaque de butée (180, 190) associée.

9. Dispositif selon l'une quelconque des revendications précédentes 7 ou 8, **caractérisé en ce que** les plaques de butée (180, 190) sont coudées de telle sorte qu'elles s'appuient de manière élastique contre le côté extérieur (60) de la paroi support (40) lorsque l'élément de fixation (10) est arrêté.

10. Dispositif selon la revendication 9, **caractérisé en ce que** les plaques de butée (180, 190) comprennent respectivement une partie de plaque (200, 210), qui s'étend parallèlement à la paroi support (40), et présentent également une autre partie de plaque (220, 230), qui est coudée par rapport à la partie de plaque (200, 210) parallèle.

11. Dispositif selon la revendication 10, **caractérisé en ce que** la partie de plaque parallèle (220, 210) relie respectivement la partie de plaque coudée (220, 230) à la plaque de liaison (240, 241) associée.

12. Dispositif selon l'une quelconque des revendications précédentes, **caractérisé en ce que** l'élément de fixation (10) est d'un seul tenant, de préférence en métal ou en plastique.

13. Dispositif selon la revendication 12, **caractérisé en ce que** l'élément de fixation est une pièce pliée découpée d'un seul tenant.

# FIG 1

# FIG 2

## FIG 3

## FIG 4

## FIG 5

## FIG 6

# FIG 7

# FIG 8

EP 1 787 031 B2

FIG 9

10 90 300
400 80

FIG 10

180
190

FIG 11

180 410

FIG 12

EP 1 787 031 B2

# FIG 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3864789 A
- WO 0228690 A1